(19) Europäisches Patentamt
European Patent Office
Office européen des brevets

(11) **EP 4 560 388 A1**

(12) **EUROPEAN PATENT APPLICATION**

(43) Date of publication:
**28.05.2025 Bulletin 2025/22**

(51) International Patent Classification (IPC):
**G02F 1/01** *(2006.01)*    **G02F 1/29** *(2006.01)*

(21) Application number: **24213561.4**

(52) Cooperative Patent Classification (CPC):
**G02F 1/292; G02F 1/0147**

(22) Date of filing: **18.11.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.11.2023 US 202363602488 P**
**03.04.2024 KR 20240045568**

(71) Applicants:
• **Samsung Electronics Co., Ltd.**
**Suwon-si, Gyeonggi-do 16677 (KR)**
• **The Board of Trustees of the Leland Stanford Junior University**
**Stanford, CA 94305-2038 (US)**

(72) Inventors:
• **PARK, Junghyun**
**16678 Suwon-si (KR)**
• **SONG, Junghwan**
**Stanford, 94305-2038 (US)**
• **LEE, Minkyung**
**16678 Suwon-si (KR)**
• **GÜSKEN, Nicholas**
**Stanford, 94305-2038 (US)**
• **BRONGERSMA, Mark**
**Stanford, 94305-2038 (US)**

(74) Representative: **Elkington and Fife LLP**
**Prospect House**
**8 Pembroke Road**
**Sevenoaks, Kent TN13 1XR (GB)**

(54) **BEAM STEERING DEVICE AND ELECTRONIC APPARATUS INCLUDING THE SAME**

(57)      Provided is a beam steering device including a phase change material layer, a metal layer on the phase change material layer, a grid structure between the phase change material layer and the metal layer, and a power source connected to the metal layer and configured to supply a current to the metal layer, wherein the grid structure is configured to output light traveling in the phase change material layer.

FIG. 1

EP 4 560 388 A1

**Description**

FIELD OF THE INVENTION

Example embodiments of the present disclosure relate to a beam steering device including a phase change material layer and an electronic apparatus including the same.

BACKGROUND OF THE INVENTION

A multi-functional advanced driving assistance system (ADAS) has been commercialized. For example, the number of vehicles equipped with functions, such as an adaptive cruise control (ACC) system that recognizes the locations and speeds of other vehicles, reduces speed if there is a risk of collision, and drives the vehicle within a set speed range if there is no risk of collision, an autonomous emergency braking system (AEB) that recognizes a vehicle in front and automatically applies brakes if there is a risk of collision but the driver does not respond or does not respond in an appropriate manner, etc., is increasing. Furthermore, it is expected that vehicles capable of autonomous driving will be commercialized in the near future.

Accordingly, interest in optical measurement devices that can provide information about the vehicle's surroundings is increasing. For example, light detection and ranging (LiDAR) for a vehicle may provide information about distances, relative speeds and azimuth angles with respect to objects around the vehicle, etc., by emitting laser to a selected area around the vehicle and detecting the reflected laser. To this end, LiDAR for a vehicle includes a beam steering device for scanning light over a desired area.

Beam steering devices may be largely divided into a mechanical beam steering device and a non-mechanical beam steering device. For example, the mechanical beam steering device may include various types of devices that rotate a light source, rotate a mirror that reflects light, move a spherical lens in a direction perpendicular to an optical axis, etc. Furthermore, the non-mechanical beam steering device may include various types of devices that use a semiconductor device, electrically control the angle of reflected light using a reflective phase array, etc.

SUMMARY OF THE INVENTION

One or more example embodiments provide a beam steering device including a phase change material layer.

One or more example embodiments also provide an electronic apparatus including a beam steering device including a phase change material layer.

Additional aspects will be set forth in part in the description which follows and, in part, will be apparent from the description, or may be learned by practice of one or more example embodiments.

According to an aspect of one or more example embodiments, there is provided a beam steering device including a phase change material layer, a metal layer on the phase change material layer, a grid structure between the phase change material layer and the metal layer, and a power source connected to the metal layer and configured to supply a current to the metal layer, wherein the grid structure is configured to output light traveling in the phase change material layer.

The beam steering device may further include a waveguide area and a light exit area having the grid structure.

A width of the waveguide area may range from 10 $\mu$m to 50 $\mu$m, and a width of the light exit area may range from 5 $\mu$m to 50 $\mu$m.

The grid structure may be on a surface of the phase change material layer.

The phase change material layer may include antimony triselenide ($Sb_2Se_3$) or antimony trisulfide ($Sb_2S_3$).

The metal layer may include gold (Au), silver (Ag), aluminum (Al), tungsten (W), or copper (Cu).

The beam steering device may further include a dielectric layer between the phase change material layer and the metal layer, wherein the grid structure is between the dielectric layer and the metal layer.

The dielectric layer may include silicon oxide (SiO2), aluminum oxide (Al2O3), zinc oxide (ZnO), titanium oxide (TiO2), or silicon nitride (Si3N4).

A refractive index of the dielectric layer may be less than a refractive index of the phase change material layer in an amorphous state.

A difference between a refractive index of the phase change material layer and a refractive index of the dielectric layer may be greater than or equal to 0.5 and less than or equal to 5.

A thickness of the phase change material layer may range from 40 nm to 100 nm.

A thickness of the metal layer may range from 10 nm to 1000 nm.

The beam steering device may further include a metal substrate on the phase change material layer opposite to the metal layer.

According to another aspect of one or more example embodiments, there is provided an electronic apparatus including a light source configured to emit light, a beam steering device configured to adjust a direction of the light emitted from the light source to an object, a photodetector configured to detect light reflected from the object, and at least one processor configured to control the beam steering device, wherein the beam steering device includes a phase change material layer, a metal layer on the phase change material layer, a grid structure between the phase change material layer and the metal layer, and a power source connected to the metal layer and configured to supply a current to the metal layer, and wherein the grid structure is configured to output the light traveling in the phase change material layer.

The beam steering device may further include a waveguide area and a light exit area having the grid structure.

A width of the waveguide area may range from 10 $\mu$m to 50 $\mu$m, and a width of the light exit area may range from 5 $\mu$m to 50 $\mu$m.

The grid structure may be on a surface of the phase change material layer.

The phase change material layer may include antimony triselenide ($Sb_2Se_3$) or antimony trisulfide ($Sb_2S_3$).

The beam steering device may further include a dielectric layer between the phase change material layer and the metal layer, wherein the grid structure is between the dielectric layer and the metal layer.

The beam steering device may further include a metal substrate, the metal substrate may be on the phase change material layer opposite to the metal layer.

According to still another aspect of one or more example embodiments, there is provided a beam steering device including a phase change material layer, a metal layer on the phase change material layer, a first dielectric layer between the phase change material layer and the metal layer, a grid structure between the first dielectric layer and the metal layer, a second dielectric layer on the phase change material layer opposite to the first dielectric layer, and a power source connected to the metal layer and configured to supply a current to the metal layer, wherein the grid structure is configured to output light traveling in the phase change material layer.

BRIEF DESCRIPTION OF THE DRAWINGS

These and/or other aspects will become apparent and more readily appreciated from the following description of the embodiments, taken in conjunction with the accompanying drawings in which:

FIG. 1 is a schematic view of a beam steering device according to one or more example embodiments;

FIG. 2 illustrates an example of adding a waveguide area to the beam steering device of FIG. 1;

FIG. 3 is a graph showing a change in the wavelength of light and reflectance according to a light output angle when a phase change material layer of a beam steering device according to one or more example embodiments is in an amorphous state;

FIG. 4 is a graph showing a change in the wavelength of light and reflectance according to a light output angle when the phase change material layer of a beam steering device according to one or more example embodiments is in a crystalline state;

FIG. 5 is a schematic view of a beam steering device according to one or more other example embodiments;

FIG. 6 illustrates an example in which the beam steering device of FIG. 5 further includes a dielectric substrate;

FIG. 7A is a graph showing a refractive index according to a light wavelength with respect to a phase change material layer in an amorphous state in vacuum;

FIG. 7B is a graph showing a refractive index according to a light wavelength with respect to a phase change material layer in an intermediate state between an amorphous state and a crystalline state in vacuum;

FIG. 7C is a graph showing a refractive index according to a light wavelength with respect to a phase change material layer in a crystalline state in vacuum;

FIG. 8A is a graph showing a refractive index according to a light wavelength with respect to a phase change material layer in an amorphous state in air;

FIG. 8B is a graph showing a refractive index according to a light wavelength with respect to a phase change material layer in an intermediate state between an amorphous state and a crystalline state in air;

FIG. 8C is a graph showing a refractive index according to a light wavelength with respect to a phase change material layer in a crystalline state in air;

FIG. 9 is a graph showing a change of ($P_{out}/P_{in}$) according to the light wavelength of a beam steering device according to one or more example embodiments;

FIG. 10 is a graph showing a change in reflectance according to an input/output angle of a beam steering device according to one or more example embodiments;

FIG. 11 is a graph showing a change in reflectance according to a light output angle of a beam steering device according to one or more example embodiments, for cases in which a crystalline state ratio is 0%, 25%, 50%, 75%, and 100%;

FIG. 12 is a schematic block diagram showing the configuration of an electronic apparatus according to one or more example embodiments;

FIGS. 13, and 14 are conceptual views showing a case of a LiDAR device according to one or more example embodiments applied to a vehicle;

FIG. 15 is a schematic block diagram of a configuration of an electronic apparatus according to one or more example embodiments;

FIG. 16 is a schematic block diagram of a configuration of a camera module provided in the electronic apparatus of FIG. 15;

FIG. 17 is a schematic block diagram of a configuration of a three-dimensional (3D) sensor provided in the electronic apparatus of FIG. 15;

FIG. 18 is a schematic block diagram of a configuration of an electronic apparatus according to one or more other example embodiments; and

FIG. 19 is a schematic block diagram of a configuration of an eye tracking sensor provided in the electronic apparatus of FIG. 18.

DETAILED DESCRIPTION

Reference will now be made in detail to embodiments, examples of which are illustrated in the accompanying drawings, wherein like reference numerals refer to like elements throughout. In this regard, the embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, a beam steering device and an electronic apparatus having the same according to various embodiments are described in detail with reference to the accompanying drawings. Throughout the drawings, like reference numerals denote like elements, and sizes of components in the drawings may be exaggerated for convenience of explanation and clarity. Terms such as "first" and "second" are used herein merely to describe a variety of constituent elements, but the constituent elements are not limited by the terms. Such terms are used only for the purpose of distinguishing one constituent element from another constituent element.

As used herein, the singular forms "a," "an," and "the" are intended to include the plural forms as well, unless the context clearly indicates otherwise. Furthermore, when a part may "include" a certain constituent element, unless specified otherwise, it may not be construed to exclude another constituent element but may be construed to further include other constituent elements. Furthermore, the size or thickness of each constituent element illustrated in the drawings may be exaggerated for clarity of explanation. Furthermore, when a material layer is described to exist on another layer, the material layer may exist directly on the other layer or a third layer may be interposed therebetween. Since a material forming each layer in the following embodiments is exemplary, other materials may be used therefor.

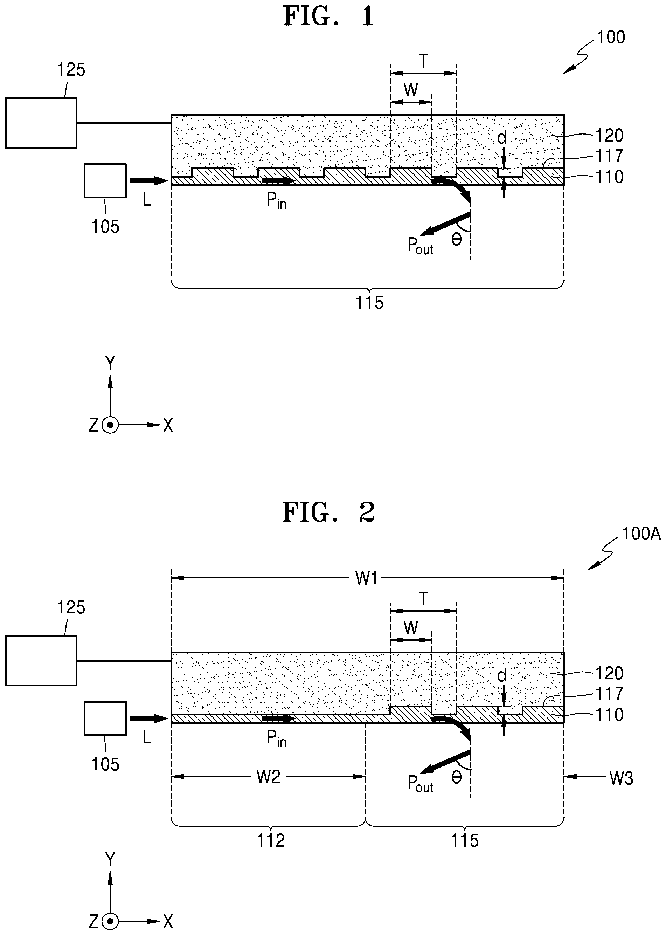

FIG. 1 is a schematic view of a beam steering device 100 according to one or more example embodiments.

The beam steering device 100 may include a phase change material layer 110, a metal layer 120 provided above the phase change material layer 110, and a grid structure 117 provided between the phase change material layer 110 and the metal layer 120.

The phase change material layer 110 may include a material having a phase that changes according to a temperature. When heated to a crystallization temperature, the phase change material layer 110 may have a crystalline phase, and when heated to a melting point and then quickly cooled, the phase change material layer 110 may have an amorphous phase. The phase change material layer 110 may have an amorphous phase, a crystalline phase, and a phase in an intermediate state between the amorphous phase and the crystalline phase, according to a heating time, a heating temperature, and the like. The refractive index of the phase change material layer 110 may change as the phase of the phase change material layer 110 changes. For example, the phase change material layer 110 may have a different refractive index according to an amorphous phase ratio or a crystalline phase ratio.

The phase change material layer 110 may include, for example, at least one of antimony triselenide ($Sb_2Se_3$) and antimony trisulfide ($Sb_2S_3$). The phase change material layer 110 may include GST including germanium (Ge), antimony (Sb), and tellurium (Te). For example, the phase change material layer 110 may include at least one of germanium antimony telluride ($Ge_2Sb_2Te_5$ and $Ge_3Sb_2Te_6$).

A power source 125 for supplying a current may be connected to the metal layer 120. The metal layer 120 may operate as an electrode and simultaneously operate as a heater to apply heat to the phase change material layer 110. Depending on a voltage applied to the metal layer 120, the temperature of the metal layer 120 may change, and the temperature of the phase change material layer 110 may change. Accordingly, the refractive index of the phase change material layer 110 may change. The metal layer 120 may include at least one of gold (Au), silver (Ag), aluminum (Al), tungsten (W), and copper (Cu). However, the metal layer 120 is not limited thereto, and may include various low-loss metals with low light absorption. The metal layer 120 may include a semi-infinite metal. The thickness of the metal layer 210 may have a range of 10 nm to 1000 nm.

The grid structure 117 may be provided between the phase change material layer 110 and the metal layer 120. The grid structure 117 may be provided directly on the phase change material layer 110. Furthermore, the grid structure 117 may be provided on the entire surface of the phase change material layer 110. An area provided with the grid structure 117 may include a light exit area 115. The grid structure 117 may have a nano size in nanometers. For example, a thickness d of the grid structure 117 may be 10 nm to 30 nm, a pitch T may be 250 nm to 500 nm, and a width W may have a value of 10% to 90% of the pitch T. The grid structure 117 may have a size smaller than the wavelength of light L output from a light source 105. The size of the grid structure 117 may be at least one of the thickness d, the width W, and the pitch T of the grid structure 117. The grid structure 117 may perform an operation of an out coupler that outputs light that propagates along the phase change material layer 110 outside the phase change material layer 110. The grid structure 117 may operate as a leaky surface plasmon metasurface or a leaky wave antenna. The leaky wave antenna may have a broad bandwidth, a wide directivity, and a relatively high radiation efficiency.

The grid structure 117 may have, for example, a stripe pattern structure or a matrix pattern structure. The grid structure 117 may have a uniform thickness and a uniform pitch along the phase change material layer 110. However, the grid structure 117 is not limited thereto, and, for example, to decrease the divergence of an output light beam, the thickness, width, or pitch of the grid structure 117 may be adjusted differently.

The light source 105 may include a laser diode (LD) or a light-emitting diode (LED) that emits a visible ray or a near-infrared ray in a band of about 800 nm to about 1500 nm. The light source 105 may emit a laser beam having a wavelength of, for example, about 900 nm to 1000 nm. However, embodiments are not limited thereto.

The light L emitted from the light source 105 may be directly incident on the phase change material layer 110 without intervention of other devices. The light source 105 may be arranged adjacent to a side surface of the phase change material layer 110. The light L emitted from the light source 105 may be propagated in a direction parallel to a longitudinal direction (X direction) of the phase change material layer 110 and incident on the phase change material layer 110. According to one or more example embodiments, the light L may be incident on the beam steering device 100, not in a direction inclined to the beam steering device 100, but in a direction parallel to the phase change material layer 110 in a side direction of the beam steering device 100. The light L may be propagated along the inside of the phase change material layer 110. When a voltage or current is applied to the metal layer 120, as the temperature of the metal layer 120 changes, the temperature of the phase change material layer 110 changes so that the refractive index of the phase change material layer 110 may be changed. The light L is guided and propagated by the phase change material layer 110 and reflected by the grid structure 117 to be output outside the beam steering device 100. The light waves may be discharged outside the beam steering device 100 by a grating vector added by the grid structure 117. The grid structure 117 may define an effective refractive index $n_{eff}$ of a waveguide mode. Furthermore, the grid structure 117, by adding a grating vector, may couple light to exit outside the beam steering device 100 and adjust a degree of coupling. The effective refractive index $n_{eff}$ and the pitch T of the grid structure 117 determine an angle $\theta$ at which light exits to a free space (refractive index=1), and satisfy Equation 1 below.

$$\sin\theta = n_{eff} + m\lambda/T \text{(m is an integer)} \quad < \text{Equation 1} >$$

Here, $\lambda$ is a wavelength of the light L, m is an integer that is a value that enables a $\sin\theta$ value to be within a range of $\pm 1$.

The effective refractive index $n_{eff}$ of a waveguide mode increases as a ratio W/T of a grid increases. The grating vector increases as the pitch T decreases. A degree of coupling decreases as a groove depth d of a grid decreases. When the degree of coupling decreases, the length of the light exit area 115 needed for coupling increases and beam divergence decreases.

The output direction of light L $P_{out}$ may vary depending on a change in the refractive index of the phase change material layer 110. The direction of light output from the beam steering device 100 may be controlled by the refractive index of the phase change material layer 110. The output direction of light $P_{out}$ may be indicated by the angle $\theta$ between an axis (Y axis) perpendicular to the phase change material layer 110 and the direction of light. The angle $\theta$ may indicate the input angle $P_{in}$/output angle $P_{out}$ of light or a beam steering angle. The angle $\theta$ may have a range of -20° to +20°.

As described above, the beam steering device 100 according to one or more example embodiments may electrically control the light exit angle when the light guided in the phase change material layer 110 exits to the free space as collimated light beam. FIG. 2 differs from FIG. 1 in that a beam steering device 100A includes a waveguide area 112 and a light exit area 115.

Similar elements having like reference numerals as those in the beam steering device 100 of FIG. 1 are substantially the same elements, detailed descriptions thereof are omitted.

The beam steering device 100A may include the waveguide area 112 having no grid structure and the light exit area 115 having the grid structure 117. In the waveguide area 112, the phase change material layer 110 may have a flat structure without a grid structure to a certain distance from a side surface of the phase change material layer 110 on which the light L output from the light source 105 is incident. In the light exit area 115, the grid structure 117 may be provided in the phase change material layer 110.

In the waveguide area 112, the light L may be propagated through total internal reflection inside the phase change material layer 110. In the light exit area 115, while propagated through the phase change material layer 110, the light L may be output by the grid structure 117 to the outside of the phase change material layer 110. A width W2 of the waveguide area 112 may have a range of 10 $\mu$m to 50 $\mu$m. A width W3 of the light exit area 115 may have a range of 5 $\mu$m to 50 $\mu$m.

In a related beam steering device, both of incident light and exit light are propagated to the free space, and to provide a different light phase according to a position, the direction of light is controlled through synthesis of phase changes of light by a plurality of light modulators. Accordingly, as a voltage corresponding to each of the plurality of light modulators is applied, an electrode structure may be complex. In contrast, the beam steering device 100A according to one or more example embodiments is formed by a single module and may control the direction of light in cooperation with a change in the refractive index of the phase change material layer 110 and the grid structure. For example, the beam steering device 100A is not provided for each of a plurality of unit pixels and does not control the direction of light by electrically controlling each of the plurality of unit pixels, but has only one power source connected to the metal layer 120 and may control the propagation direction of output light according to a change in the refractive index of the phase change material layer 110. Accordingly, the beam steering device 100A according to one or more example embodiments may have a more simplified electrode structure.

As Joule's heat is generated by supplying a current to the metal layer 120, the phase change material layer 110 may be changed from an amorphous state to a crystalline state. The refractive index of the phase change material layer 110 may be indicated by complex index of refraction having a real number part and an imaginary number part. The imaginary number part of a complex index of refraction may denote energy loss, and the real number part of a complex index of refraction may be defined by a ratio of a phase speed in the free space with respect to a phase speed in a medium, and may denote an effective refractive index in a waveguide mode of the phase change material layer 110. The phase change material layer 110 may include a material in which the imaginary number part of a refractive index is small and a range of change in the real number part of a refractive index is large, in the corresponding operating wavelength band. When the phase change material layer 110 is changed from an amorphous state to a crystalline state, the effective refractive index of the phase change material layer 110 may be increased.

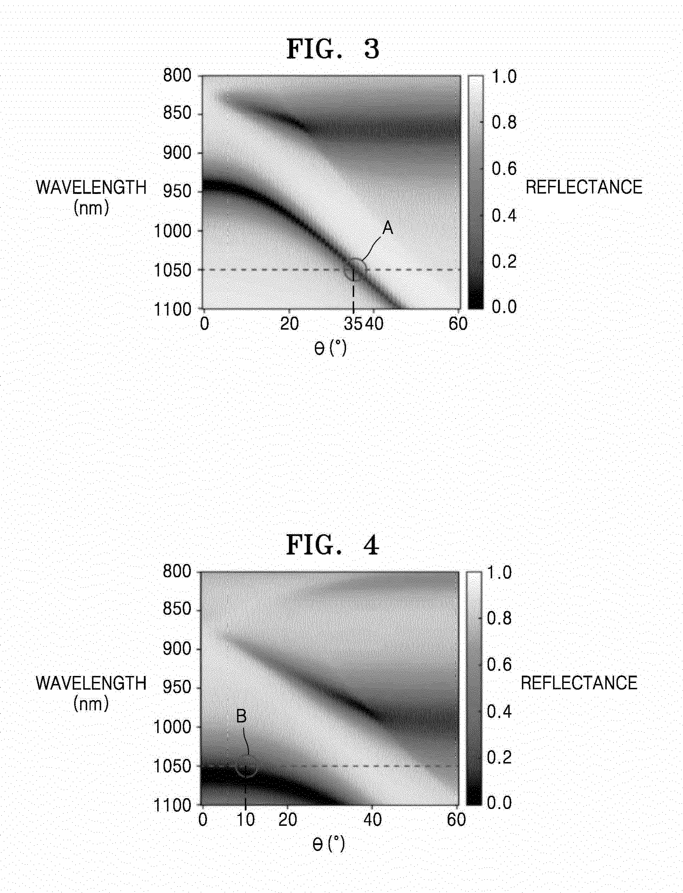

FIGS. 3 and 4 show a result of a reflectance simulation to obtain an input/output angle $\theta$ of light when a $Sb_2S_3$ phase change material layer is changed from an amorphous (a-$Sb_2S_3$) state to a crystalline (c-$Sb_2S_3$) state.

In graphs illustrated in FIGS. 3 and 4, a horizontal axis denotes the input/output angle $\theta$ of light, a left vertical axis denotes the wavelength of light, and a right vertical axis denotes reflectance. FIG. 3 shows the wavelength and reflectance of the beam steering device 100A according to one or more example embodiments with respect to the input/output angle $\theta$ of light. The input/output angle $\theta$ of light shows an angle at which the reflectance becomes minimum according to the wavelength and incident angle of light. The light traveling in the corresponding waveguide mode may be coupled into exit light waves in the light exit area 115 and emitted. The minimum reflectance angle may indicate the input/output angle in a waveguide mode. The waveguide mode may refer to an intrinsic state in which light waves passing through a grid maintain a waveform while traveling in a +x direction, and the waveguide mode has a speed decreased due to the effective refractive index $n_{eff}$ compared with a speed of light in vacuum. The input/output angle $\Theta$ satisfies Equation 2 below as an angle in the free space corresponding to the effective refractive index $n_{eff}$ in a waveguide mode.

$$\theta = \sin^{-1}(n_{eff} - \lambda/T \times m) < \text{Equation 2} >$$

Here, m is an integer.

When light that is externally input is coupled into a waveguide mode, the reflectance of external light becomes minimum, and the angle in this state is referred to as the minimum reflectance angle. The minimum reflectance angle is the same as the input/output angle according to the reciprocal principle.

The angle at which reflectance becomes minimum according to each wavelength indicates that incident light waves are coupled into the waveguide mode and dissipated. The angle at which reflectance becomes minimum according to each wavelength may indicate that the incident light waves travel in the waveguide mode are coupled into exit light waves and emitted. For example, the minimum reflectance angle may refer to the input/output angle in the waveguide mode. FIG. 3 shows the input/output angle of light with respect to the wavelength of light when the phase change material layer 110 is in an amorphous state. FIG. 4 shows the input/output angle of light with respect to the wavelength of light when the phase change material layer 110 is in a crystalline state. In FIG. 3, for light of a 1050 nm wavelength, the input/output angle (the minimum reflectance angle) in an amorphous state may be about 35°, and as illustrated in FIG. 4, when the phase change material layer 110 is changed to a crystalline state, the input/output angle may be changed to about 10°. The beam steering device 100 (100A) may have, for example, a beam steering angle from -20° to +20°.

As such, the beam steering device 100 (100A) according to one or more example embodiments may adjust the output angle of light according to a change in the refractive index of the phase change material layer 110 and the grid structure 117.

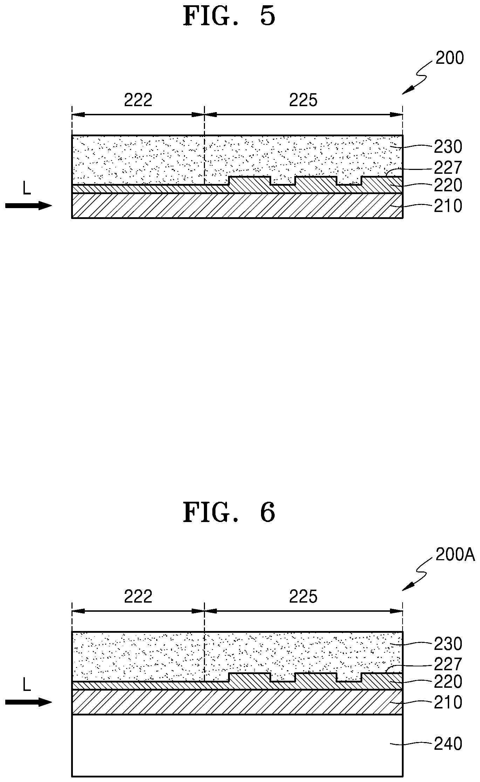

FIG. 5 illustrates a beam steering device 200 according to one or more other example embodiments.

The beam steering device 200 may include a phase change material layer 210, a dielectric layer 220 on the phase change material layer 210, and a metal layer 230 on the dielectric layer 220.

The phase change material layer 210 may have a plane structure with a planar (flat) surface. The phase change material layer 210 may include, for example, at least one of $Sb_2Se_3$ and $Sb_2S_3$. The phase change material layer 210 may include GST including Ge, Sb, and Te. For example, the phase change material layer 210 may include at least one of $Ge_2Sb_2Te_5$ and $Ge_3Sb_2Te_6$.

The dielectric layer 220 may include, for example, silicon oxide ($SiO_2$), aluminum oxide ($Al_2O_3$), zinc oxide (ZnO), titanium oxide ($TiO_2$), or silicon nitride ($Si_3N_4$). The dielectric layer 220 may include a grid structure 227 on a boundary surface with the metal layer 230. The grid structure 227 may be provided on the entire boundary surface between the dielectric layer 220 and the metal layer 230. However, embodiments are not limited thereto, and for example, the grid structure 227 may be provided on a portion of the boundary surface between the dielectric layer 220 and the metal layer 230. The beam steering device 200 may include a waveguide area 222 having no grid structure and a light exit area 225 having the grid structure 227. Although FIG. 5 illustrates that the beam steering device 200 includes the waveguide area 222 and the light exit area 225, the beam steering device 200 may include the light exit area 225 without the waveguide area 222.

The refractive index of the phase change material layer 210 may be greater than the refractive index of the dielectric layer 220. The refractive index of the dielectric layer 220 may be less than the refractive index of the phase change material layer 210 in an amorphous state. As the refractive index of the phase change material layer 210 is greater than the refractive index of the dielectric layer 220, light waves may be focused on the phase change material layer 210 of a relatively high refraction material and propagated. A refractive index difference $\Delta$ between the dielectric layer 220 and the phase change material layer 210 may have a range in which $0.5 \leq \Delta \leq 5$. As the refractive index difference $\Delta$ between the phase change material layer 210 and the dielectric layer 220 increases, a light loss rate may be reduced, and the focus of light through the phase change material layer 210 may be increased. The dielectric layer 220 may cause relatively slow occurrence of coupling, through which a distance or area in which light exits in a waveguide mode may be increased. As a result, beam divergence may be reduced so that resolving power may be increased.

The metal layer 230 may operate as an electrode and also as a heater to apply heat to the phase change material layer 210. The metal layer 230 may include at least one of gold (Au), silver (Ag), aluminum (Al), tungsten (W), and copper (Cu).

The thickness of the dielectric layer 220 may have a range of 20 nm to 40 nm, the thickness of the phase change material layer 210 may have a range of 40 nm to 100 nm. For example, the dielectric layer 220 may be a $SiO_2$ layer having a 20 nm thickness, and the phase change material layer 210 may be a $Sb_2Se_3$ layer having a 40 nm thickness.

Next, FIG. 6 illustrates a beam steering device 200A in which a metal substrate 240 is further provided in the beam steering device 200 of FIG. 5.

The beam steering device 200A may include the metal substrate 240 below the phase change material layer 210. The metal substrate 240 may include a material that is the same as or different from the material of the metal layer 230. The metal substrate 240 may include at least one of Au, Ag, Al, W, and Cu. The metal substrate 240 may operate as an electrode, a heat generator, and a coupler. The metal substrate 240 may operate as an electrode so as to operate as a path through which a current flows. Furthermore, the metal substrate 240 may operate as heat generator that generates Joule's heat as a current flows therein so as to change the phase of an adjacent phase change material. In addition, the metal substrate 240 may operate as a coupler that outputs light to the free space in a waveguide mode through the grid structure 227 formed in an array of ridges and grooves.

In order to explain the operation of a beam steering device, a refractive index change when the phase change material layer 210 is formed as a $Sb_2Se_3$ layer is described below.

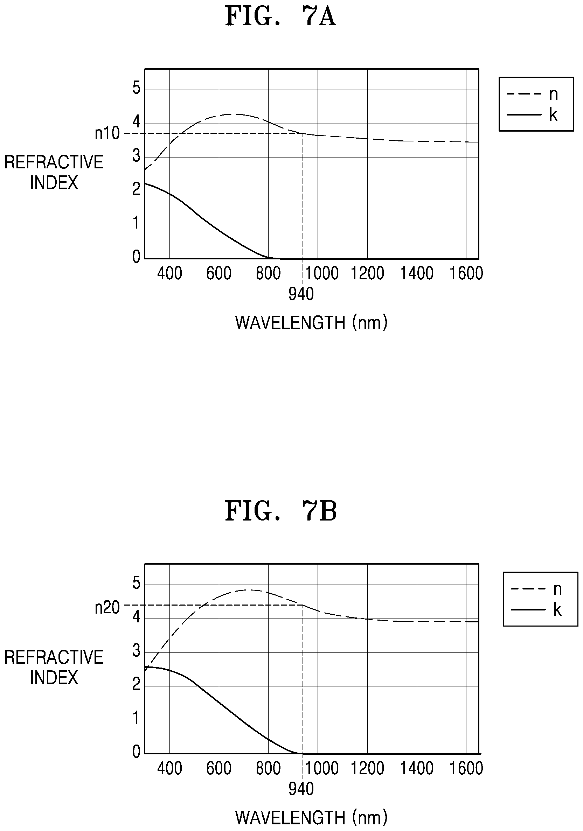

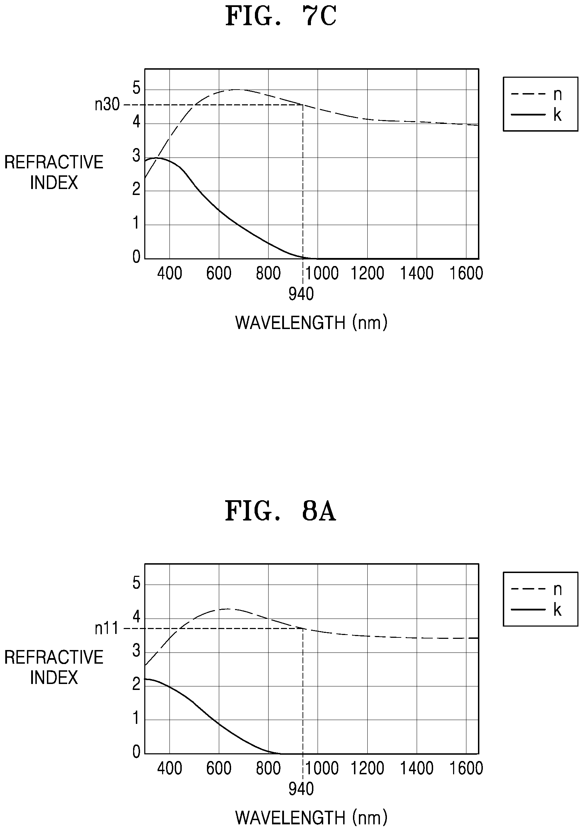

FIGS. 7A, 7B, and 7C are graphs showing a real number part and an imaginary number part of a complex index of refraction of the SbzSes phase change material layer 210 in vacuum. In the graphs, n denotes a real number part of refractive index, and k denotes an imaginary number part of refractive index. The real number part of refractive index denotes an effective refractive index, and the imaginary number part of refractive index denotes energy loss. Thus, the smaller the imaginary number part of refractive index is, the less the energy loss may be obtained. FIG. 7A shows a change in the refractive index according to the wavelength before the $Sb_2Se_3$ phase change material layer 210 is annealed, FIG. 7B shows a change in the refractive index according to the wavelength when the $Sb_2Se_3$ phase change material layer 210 is heated to 200 °C, and FIG. 7C shows a change in the refractive index according to the wavelength when the $Sb_2Se_3$ phase change material layer 210 is heated to 350°C. FIG. 7A shows that the $Sb_2Se_3$ phase change material layer 210 is in an amorphous state, FIG. 7B shows that the $Sb_2Se_3$ phase change material layer 210 is an intermediate state between the amorphous state and the crystalline state, and FIG. 7C shows that the $Sb_2Se_3$ phase change material layer 210 is in a crystalline state.

Here, the thickness of the $Sb_2Se_3$ phase change material layer 210 is 60 nm, and the dielectric layer 220 is a $SiO_2$ layer having a thickness of 5 nm. As illustrated in FIG. 7A, when the $Sb_2Se_3$ phase change material layer 210 is in the amorphous state, in a 940 nm wavelength band, the imaginary number part of refractive index is relatively very low to be about $10^{-5}$ or less, and as illustrated in FIGS. 7B and 7C, when the $Sb_2Se_3$ phase change material layer 210 is in the intermediate state and the crystalline state, the imaginary number part of refractive index is still maintained to be as very low as about 0.147. Referring to FIGS. 7A, 7B, and 7C, the real number part of refractive index in a 940 nm wavelength band is n10, n20, and n30, and a difference between n10 and n30, for example, a change width in the real number part of refractive index is about 0.9, which indicates that a refractive index change width is very wide.

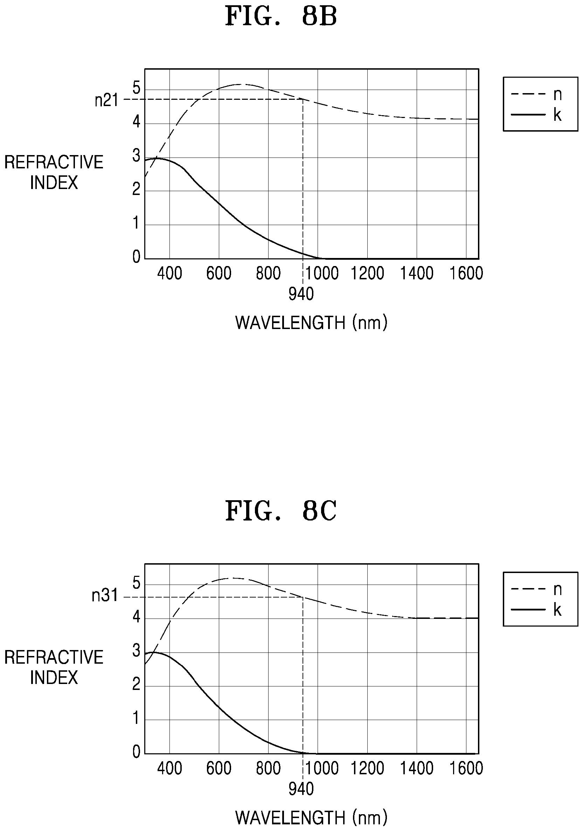

FIGS. 8A, 8B, and 8C show a real number part and an imaginary number part of a complex index of refraction of the $Sb_2Se_3$ phase change material layer 210 in air. FIG. 8A shows a change in the refractive index according to the wavelength before the $Sb_2Se_3$ phase change material layer 210 is annealed, FIG. 8B shows a case in which the $Sb_2Se_3$ phase change material layer 210 is heated to 200°C, and FIG. 8C shows a case in which the $Sb_2Se_3$ phase change material layer 210 is 350°C. Referring to FIGS. 8A, 8B, and 8C, a real number part of refractive index in a 940 nm wavelength band is n11, n21, and n31, and a difference between n11 and n31, that is, a change width in the real number part of refractive index in air is greater than or equal to about 0.9 or more, which indicates that a refractive index change width is relatively large.

The phase change material layer may include a phase change material having a relatively low imaginary number part of refractive index, a relatively high real number part of refractive index, and a relatively large refractive index change width according to a temperature.

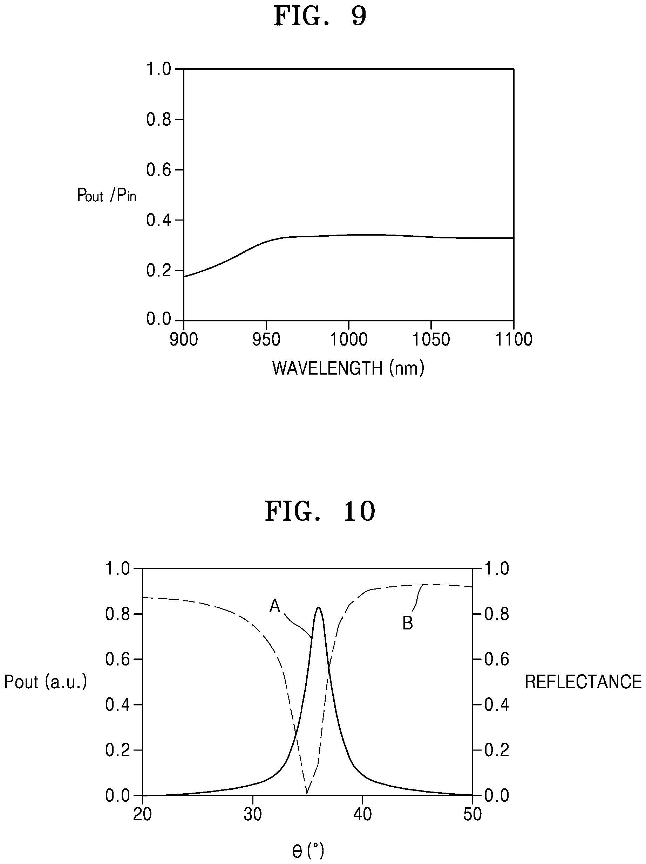

FIG. 9 shows the intermediate state between the amorphous state and the crystalline state, in which a horizontal axis denotes the wavelength of light, and a vertical axis denotes an optical efficiency, for example, a ratio of an output light strength $P_{out}$ to an input light strength $P_{in}$. ($P_{out}/P_{in}$) is maintain at about 35% or more.

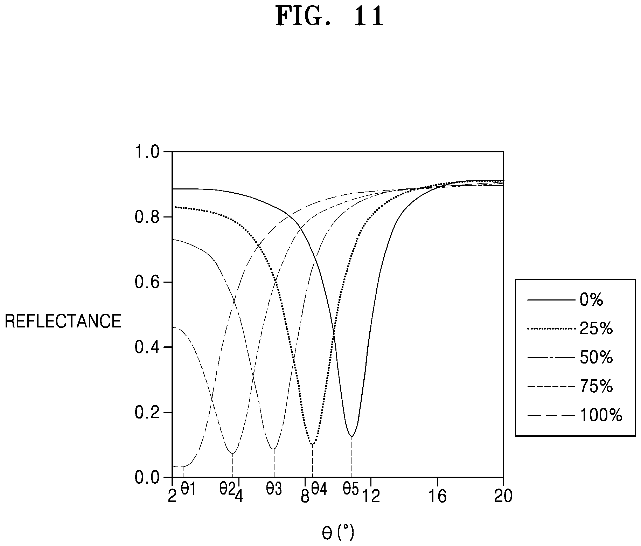

FIG. 10 is a graph in which a horizontal axis denotes an input/output angle $\theta$, a left vertical axis denotes an output light strength $P_{out}$, and a right vertical axis denotes reflectance. A is an output light strength graph, and B is a reflectance graph. FIG. 10 illustrates that an angle at which reflectance becomes minimum and an angle at which the output light strength becomes maximum are approximately congruous. FIG. 11 shows a change in light reflectance to the input/output angle $\theta$ for each case when a ratio of a crystalline state is changed from 0% (i.e., a complete amorphous state) to 25%, 50%, 75%, and 100% (i.e., a complete crystalline state). When the ratio of a crystalline state is 0%, an input/output angle at which the reflectance becomes minimum is assumed to be $\theta 5$, when the ratio of a crystalline state is 25%, an input/output angle at which the reflectance becomes minimum is assumed to be $\theta 4$, when the ratio of a crystalline state is 50%, an input/output angle at which the reflectance becomes minimum is assumed to be $\theta 3$, when the ratio of a crystalline state is 75%, an input/output angle at which the reflectance becomes minimum is assumed to be $\theta 2$, and when the ratio of a crystalline state is 100%, an input/output angle at which the reflectance becomes minimum is assumed to be $\theta 1$, there is a relationship such that $\theta 5 > \theta 4 > \theta 3 > \theta 2 > \theta 1$. The greater the ratio of a crystalline state of the phase change material layer is, the smaller the input/output angle is. As such, the input/output angle may be controlled according to the ratio of a crystalline state in the phase change material layer. The light output angle may be controlled with a range of - 20° to +20°.

In the beam steering device according to one or more example embodiments, a beam steering device may be miniaturized because light is directly input to the side surface of the phase change material layer so that additional devices needed when light is obliquely input to the front surface of the beam steering device are unnecessary. In the beam steering device according to one or more example embodiments, as the light traveling inside the phase change material layer is output when incident on the grid structure, and the input/output angle of light is controlled according to the refractive index change of the phase change material layer, the condition of arranging a plurality of light modulators as in the case of steering light using the phase modulation of light is unnecessary. Thus, in the beam steering device according to one or more example embodiments, as a single phase change material layer is provided, and a single pair of electrodes to apply a current to the phase change material layer are provided, the electrodes and an electrode wiring structure may be more simplified.

The beam steering device may be applied to various fields, for example, LiDAR devices, three-dimensional (3D) depth cameras that obtain distance information for each direction, and the like. The beam steering devices according to one or more example embodiments described above may be adopted for vehicles, smartphones, and the like to increase sensing precision.

The beam steering devices according to one or more example embodiments may be used, in addition to the LiDAR for vehicle, for a LiDAR for robots, a LiDAR for drones, an intruder detection system for security, a subway screen door obstacle detection system, a depth sensor, a sensor for user face recognition on mobile phones, augmented reality (AR), operation recognition and object profiling in TV or entertainment devices, and the like.

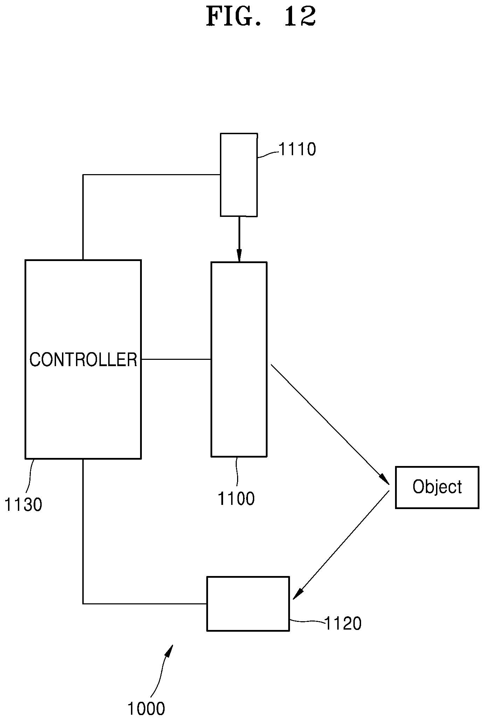

For example, FIG. 12 is a schematic block diagram showing the configuration of an electronic apparatus 1000 according to one or more example embodiments.

Referring to FIG. 12, the electronic apparatus 1000 according to one or more example embodiments may include a light source 1110 emitting light, a beam steering device 1100 adjusting the direction of light output from the light source 1110, a photodetector 1120 detecting the light emitted from the beam steering device 1100 and reflected from an object, and a controller 1130 controlling the beam steering device 1100.

The light source 1110 may include, for example, a laser diode (LD) or a light-emitting diode (LED) that emits visible light or a near-infrared ray in a band of about 800 nm to about 1500 nm. The light source 1110 may emit, for example, a laser beam having a wavelength in a range of 900 nm to 1000 nm.

The beam steering device 1100 may include the embodiments described with reference to FIGS. 1 to 11. The beam steering device 1100 may adjust the traveling direction of a light beam by changing the refractive index of a phase change material layer by an input of at least one of a voltage, a current, heat, a temperature, and a magnetic field. Although FIG. 12 illustrates an example in which the light source 1110 is provided separately from the beam steering device 1100, the light source 1110 may be provided within the beam steering device 1100. The light emitted from the light source 1110 is not obliquely incident on the beam steering device 1100, but in a direction parallel to the beam steering device 1100. For example, light may be directly incident on the side surface of the phase change material layer (110 in FIG. 1) of the beam steering device 1100.

The controller 1130 may control the operations of the beam steering device 1100, the light source 1110, and the photodetector 1120. For example, the controller 1130 may control the on/off operations of the light source 1110 and the photodetector 1120 and the beam scanning operation of the beam steering device 1100. Furthermore, the controller 1130 may calculate (obtain) information about the object based on the measurement result of the photodetector 1120.

The electronic apparatus 1000 may periodically emit light to various nearby areas by using the beam steering device 1100 to obtain information about objects located at a plurality of nearby positions.

The controller 1130 may include an operation portion obtaining and operating data and a driving portion driving the beam steering device 1100. Furthermore, the controller 1130 may further include a power source, a memory, and the like.

The beam steering device according to the one or more example embodiments described above may be applied to various electronic apparatuses. As an example, the beam steering device according to the one or more example embodiments may be applied to a LiDAR device. The LiDAR device may be a phase-shift type device or a time-of-flight (TOF) type device. The LiDAR device may be applied to autonomous vehicles, flying objects such as drones, and the like, mobile devices, small walking devices (e.g., bicycles, motorcycles, strollers, boards, etc.), robots, auxiliary devices for human/animal (e.g., canes, helmets, accessories, clothing, watches, bags, etc.), Internet of Things (IoT) devices/systems, security devices/systems, and the like.

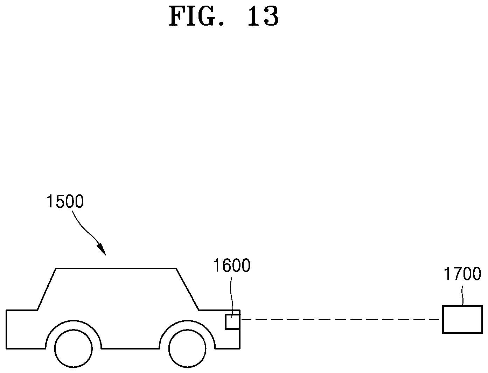

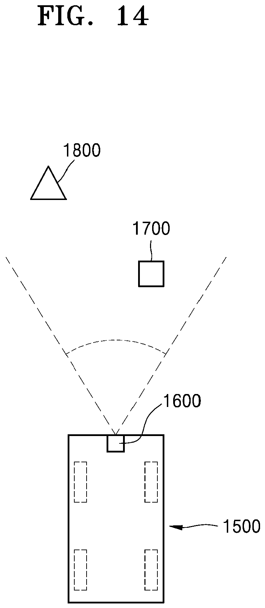

FIGS. 13 and 14 are concept views showing cases in which a LiDAR device 1600 including a beam steering device according to one or more example embodiments is applied to a vehicle 1500. FIG. 13 is a side view, and FIG. 14 is a top view.

Referring to FIG. 13, the LiDAR device 1600 may be applied to the vehicle 1500, and information about a subject 1700 may be obtained by using the same. The vehicle 1500 may be a vehicle having an autonomous function. The subject 1700, such as an object or a human located in a direction in which the vehicle 1500 travels, may be detected by using the LiDAR device 1600. Furthermore, a distance to the subject 1700 may be measured by using information about a time difference between a transmitting signal and a detection signal, and the like. Furthermore, as illustrated in FIG. 14, information about the subject 1700 that is located near and a subject 1800 that is located far may be obtained within an optical scanning range. Although FIG. 14 illustrates an example in which only one LiDAR device 1600 is installed in a vehicle, as necessary, a plurality of LiDAR devices 1600 may be installed at various positions in the vehicle to thus obtain information about the subjects 1700 and 1800 in all directions around the vehicle.

The beam steering devices according to one or more example embodiments may be applied to various electronic apparatuses in addition to the LiDAR. For example, when the beam steering devices according to one or more example embodiments is used, as three-dimensional information of space and subject may be obtained through scanning, the beam steering devices may be applied to a three-dimensional image obtaining device, a three-dimensional camera, or the like. Furthermore, the beam steering device may be applied to a holographic display device and a structured light generation device. Furthermore, the beam steering device may be applied to various optical devices, such as a hologram generation device, a light coupling device, a variable focus lens, a depth sensor, and the like. Furthermore, the beam steering device may be applied to various fields in which a metasurface or a metastructure is used. In addition, the beam steering device according to one or more example embodiments and an electronic apparatus including the same may be applied to various fields of optical and electronic apparatuses for various purposes.

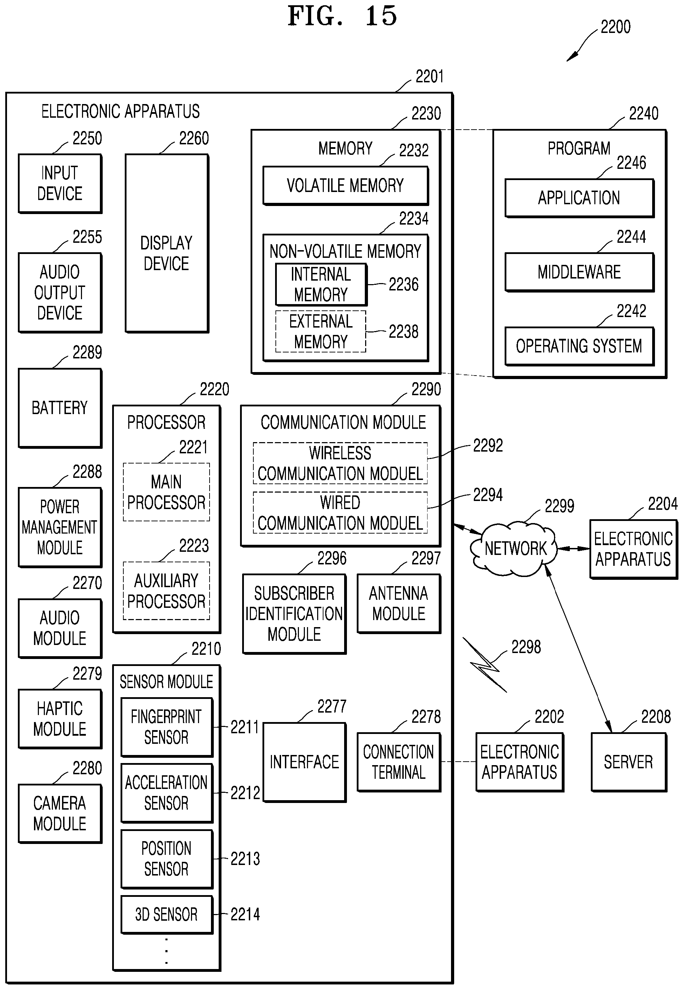

FIG. 15 is a schematic block diagram showing the configuration of an electronic apparatus 2201 according to one or more example embodiments.

Referring to FIG. 15, in a network environment 2200, the electronic apparatus 2201 may communicate with another electronic apparatus 2202 through a first network 2298 (a short-range wireless communication network etc.), or another electronic apparatus 2204 and/or a server 2208 through a second network 2299 (a long-range wireless communication network etc.). The electronic apparatus 2201 may communicate with the electronic apparatus 2204 through the server 2208. The electronic apparatus 2201 may include a processor 2220, a memory 2230, an input device 2250, an audio output device 2255, a display device 2260, an audio module 2270, a sensor module 2210, an interface 2277, a haptic module 2279, a camera module 2280, a power management module 2288, a battery 2289, a communication module 2290, a subscriber identification module 2296, and/or an antenna module 2297. In the electronic apparatus 2201, some of the constituent elements (the display device 2260 etc.) may be omitted or another constituent element may be added. Some of these constituent elements may be implemented as one integrated circuit. For example, a fingerprint sensor 2211, an iris sensor, an illuminance sensor, and the like of the sensor module 2210 may be implemented by being embedded in the display device 2260 (a display etc.).

The processor 2220 may control, by executing software (a program 2240 etc.), one or a plurality of other constituent elements (a hardware or software constituent element etc.) of the electronic apparatus 2201, and perform various pieces of data processing or operations. As part of data processing or operations, the processor 2220 may load commands and/or data received from other constituent elements (the sensor module 2210, the communication module 2290, etc.) in a volatile memory 2232, process the command and/or data stored in the volatile memory 2232, and store resultant data in a non-volatile memory 2234. The processor 2220 may include a main processor 2221 (a central processing unit, an application processor, etc.) and an auxiliary processor 2223 (a graphics processing unit, an image signal processor, a sensor hub processor, a communication processor, etc.), which are operable independently or together. The auxiliary processor 2223 may consume less power than the main processor 2221 and may perform a specialized function.

The auxiliary processor 2223 may control functions and/or states related to some constituent elements (the display device 2260, the sensor module 2210, the communication module 2290, etc.) of the electronic apparatus 2201, instead of the main processor 2221 when the main processor 2221 is in an inactive state (a sleep state), or with the main processor 2221 when the main processor 2221 is in an active state (an application execution state). The auxiliary processor 2223 (an image signal processor, a communication processor, etc.) may be implemented as a part of functionally related other constituent elements (the camera module 2280, the communication module 2290, etc.).

The memory 2230 may store various pieces of data needed for constituent element (the processor 2220, the sensor module 2210, etc.) of the electronic apparatus 2201. The data may include, for example, software (the program 2240 etc.) and input data and/or output data regarding commands related thereto. The memory 2230 may include the volatile memory 2232 and/or the non-volatile memory 2234. The non-volatile memory 2234 may include an internal memory 2236 and an external memory 2238.

The program 2240 may be stored as software in the memory 2230, and may include an operating system 2242, a middleware 2244, and/or an application 2246.

The input device 2250 may receive commands and/or data to be used in the constituent elements (the processor 2220 etc.) of the electronic apparatus 2201, from the outside (a user etc.) of the electronic apparatus 2201. The input device 2250 may include a microphone, a mouse, a keyboard, and/or a digital pen (a stylus pen etc.).

The audio output device 2255 may output an audio signal to the outside of the electronic apparatus 2201. The audio output device 2255 may include a speaker and/or a receiver. The speaker may be used for general purposes such as multimedia playback or recording playback, and the receiver may be used to receive incoming calls. The receiver may be combined as a part of the speaker or implemented as an independent separate device.

The display device 2260 may visually provide information to the outside of the electronic apparatus 2201. The display device 2260 may include a display, a hologram device, or a projector, and a control circuit for controlling such a device. The display device 2260 may include a touch circuitry set to sense a touch, and/or a sensor circuit (a pressure sensor etc.) set to measure the strength of a force generated by the touch.

The audio module 2270 may convert sound into an electrical signal or reversely an electrical signal into sound. The audio module 2270 may obtain sound through the input device 2250, or output sound through the audio output device 2255 and/or a speaker and/or a headphone of another electronic apparatus (the electronic apparatus 2202, etc.) connected to the electronic apparatus 2201 in a wired or wireless manner.

The sensor module 2210 may sense an operation state (power, a temperature, etc.) of the electronic apparatus 2201, or an external environment state (a user state etc.), and generate an electrical signal and/or data value corresponding to a sensed state. The sensor module 2210 may include the fingerprint sensor 2211, an acceleration sensor 2212, a position sensor 2213, a 3D sensor 2214, and the like, and further include an iris sensor, a gyro sensor, a barometric pressure sensor, a magnetic sensor, a grip sensor, a proximity sensor, a color sensor, an infrared (IR) sensor, a biometric sensor, a temperature sensor, a humidity sensor, and/or an illuminance sensor. The 3D sensor 2214 may sense a shape, a movement, and the like of an object by emitting light to the object and analyzing light reflected from the object, and may include any one of the beam steering devices according to the above-described one or more example embodiments.

The interface 2277 may support one or more designated protocols to be used for connecting the electronic apparatus 2201 to another electronic apparatus (the electronic apparatus 2202, etc.) in a wired or wireless manner. The interface 2277 may include a high definition multimedia interface (HDMI), a universal serial bus (USB) interface, an SD card interface, and/or an audio interface.

A connection terminal 2278 may include a connector for physically connecting the electronic apparatus 2201 to another electronic apparatus (the electronic apparatus 2202, etc.). The connection terminal 2278 may include an HDMI connector, a USB connector, an SD card connector, and/or an audio connector (a headphone connector etc.).

The haptic module 2279 may convert electrical signals into mechanical stimuli (vibrations, movements, etc.) or electrical stimuli that are perceivable by a user through tactile or motor sensations. The haptic module 2279 may include a motor, a piezoelectric device, and/or an electrical stimulation device.

The camera module 2280 may capture a still image and a video. The camera module 2280 may include a lens assembly including one or a plurality of lenses, image sensors, image signal processors, and/or flashes. The lens assembly of the camera module 2280 may collect light emitted from an object that is a target for image capturing, and the lens assembly may include any one of the beam steering devices according to the above-described one or more example embodiments.

The power management module 2288 may manage power supplied to the electronic apparatus 2201. The power management module 2288 may be implemented as a part of a power management integrated circuit (PMIC).

The battery 2289 may supply power to the constituent elements of the electronic apparatus 2201. The battery 2289 may include non-rechargeable primary cells, rechargeable secondary cells, and/or fuel cells.

The communication module 2290 may establish a wired communication channel and/or a wireless communication channel between the electronic apparatus 2201 and another electronic apparatus (the electronic apparatus 2202, the electronic apparatus 2204, the server 2208, etc.), and support a communication through an established communication channel. The communication module 2290 may be operated independently of the processor 2220 (the application processor etc.), and may include one or a plurality of communication processors supporting a wired communication and/or a wireless communication. The communication module 2290 may include a wireless communication module 2292 (a cellular communication module, a short-range wireless communication module, a global navigation satellite system (GNSS) communication module, etc.), and/or a wired communication module 2294 (a local area network (LAN) communication module, a power line communication module, etc.). Among the above communication modules, a corresponding communication module may communicate with another electronic apparatus through the first network 2298 (a short-range communication network such as Bluetooth, WiFi Direct, or infrared data association (IrDA)) or the second network 2299 (a long-range communication network such as a cellular network, the Internet, or a computer network (LAN, WAN, etc.)). These various types of communication modules may be integrated into one constituent element (a single chip etc.), or may be implemented as a plurality of separate constituent elements (multiple chips). The wireless communication module 2292 may verify and authenticate the electronic apparatus 2201 in a communication network such as the first network 2298 and/or the second network 2299 by using subscriber information (an international mobile subscriber identifier (IMSI), etc.) stored in the subscriber identification module 2296.

The antenna module 2297 may transmit signals and/or power to the outside (another electronic apparatus etc.) or receive signals and/or power from the outside. An antenna may include an emitter formed in a conductive pattern on a substrate (a printed circuit board (PCB) etc.). The antenna module 2297 may include one or a plurality of antennas. When the antenna module 2297 includes a plurality of antennas, the communication module 2290 may select, from among the antennas, an appropriate antenna for a communication method used in a communication network such as the first network 2298 and/or the second network 2299. Signals and/or power may be transmitted or received between the communication module 2290 and another electronic apparatus through the selected antenna. Other parts (an RFIC etc.) than the antenna may be included as a part of the antenna module 2297.

Some of the constituent elements may be connected to each other through a communication method between peripheral devices (a bus, general purpose input and output (GPIO), a serial peripheral interface (SPI), a mobile industry processor interface (MIPI), etc.) and may mutually exchange signals (commands, data, etc.).

The command or data may be transmitted or received between the electronic apparatus 2201 and the external electronic apparatus 2204 through the server 2208 connected to the second network 2299. The electronic apparatuses 2202 and 2204 may be of a type that is the same as or different from the electronic apparatus 2201. All or a part of operations executed in the electronic apparatus 2201 may be executed in one or a plurality of the electronic apparatuses 2202 and 2204 and the server 2208. For example, when the electronic apparatus 2201 needs to perform an operation or service, the electronic apparatus 2201 may request one or a plurality of other electronic apparatuses to perform part or the whole of the function or service, instead of performing the function or service by itself. The one or a plurality of the electronic apparatuses receiving the request may perform additional functions or services related to the request and transmit a result of the performance to the electronic apparatus 2201. To this end, cloud computing, distributed computing, and/or client-server computing technology may be used.

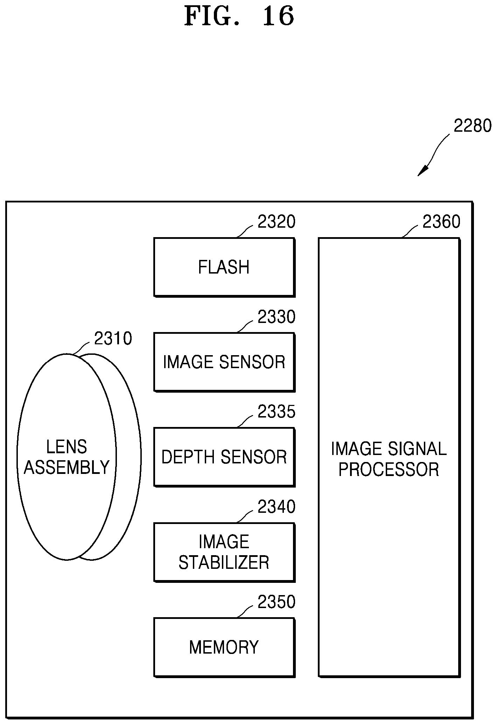

FIG. 16 is a schematic block diagram showing the configuration of the camera module 2280 provided in the electronic apparatus 2201 of FIG. 15. The camera module 2280 may be adopted, for example, in smartphones.

Referring to FIG. 16, the camera module 2280 may include a lens assembly 2310, a flash 2320, an image sensor 2330, a depth sensor 2335, an image stabilizer 2340, a memory 2350 (a buffer memory, etc.), and/or an image signal processor 2360. The lens assembly 2310 may collect light emitted from a subject that is a target of image photographing. The lens assembly 2310 may include one or more refraction lenses and one or more phase modulators. The phase modulator may be designed as a lens that has a certain phase profile and has a compensation structure phase to reduce phase discontinuity. The lens assembly 2310 including such a phase modulator may implement desired optical performance and have a short optical path length. The depth sensor 2335 may include a beam steering device according to one or more example embodiments.

The camera module 2280 may further include an actuator. The actuator may drive the positions of lens elements constituting the lens assembly 2310 and adjust a separation distance between the lens elements for, for example, zooming and/or autofocus (AF).

The camera module 2280 may include a plurality of lens assemblies 2310, and in this case, the camera module 2280 may be a dual camera, a 360° camera, or a spherical camera. Some of the lens assemblies 2310 may have the same lens attributes (field of view, focal length, autofocus, F number, optical zoom, etc.), or other lens attributes. The lens assembly 2310 may include a wide-angle lens or a telephoto lens.

The flash 2320 may emit light used to reinforce the light emitted or reflected from the subject. The flash 2320 may include one or more light-emitting diodes (a red-green-blue (RGB) LED, a white LED, an IR LED, an ultraviolet (UV) LED, etc.), and/or a xenon lamp. The image sensor 2330 may obtain an image corresponding to the subject by converting the light emitted or reflected from the subject and transmitted through the lens assembly 2310 into an electrical signal. The image sensor 2330 may include one or a plurality of sensors selected from among image sensors having different attributes, such as an RGB sensor, a black and white (BW) sensor, an IR sensor, or a UV sensor. Each sensor in the image sensor 2330 may be implemented by a charged coupled device (CCD) sensor and/or a complementary metal oxide semiconductor (CMOS) sensor.

The image stabilizer 2340 may compensate for a negative effect due to a movement by moving one or a plurality of lenses in the lens assembly 2310 or the image sensor 2330 in a specific direction or controlling (control of read-out timing, etc.) the operation properties of the image sensor 2330, in response to a movement of the camera module 2280 or the electronic apparatus 2201 including the camera module 2280. The image stabilizer 2340 may detect a movement of the camera module 2280 or the electronic apparatus 2201 by using a gyro sensor or an acceleration sensor arranged inside or outside the camera module 2280. The image stabilizer 2340 may be optically implemented.

The memory 2350 may store part or the whole data of an image obtained through the image sensor 2330 for the subsequent image processing work. For example, when a plurality of images are obtained at fast speed, the obtained original data (Bayer-patterned data, high-resolution data, etc.) may be stored in the memory 2350, and only a low-resolution image is displayed and then the original data of a selected (user selection, etc.) image is transmitted to the image signal processor 2360. The memory 2350 may be integrated with the memory 2230 of the electronic apparatus 2201 or may be configured as an independently operating separate memory.

The image signal processor 2360 may perform one or more image processes on the image obtained through the image sensor 2330 or the image data stored in the memory 2350. The one or more image processes may include depth map generation, three-dimensional modeling, panorama generation, feature extraction, image synthesis, and/or image compensation (noise reduction, resolution adjustment, brightness adjustment, blurring, sharpening, softening, etc.). The image signal processor 2360 may perform control (exposure time control, read-out timing control, etc.) on components (the image sensor 2330, etc.) in the camera module 2280. The image processed by the image signal processor 2360 may be stored again in the memory 2350 for additional processing or may be provided to external components (the memory 2230, the display device 2260, the electronic apparatus 2202, the electronic apparatus 2204, the server 2208, etc.) of the camera module 2280. The image signal processor 2360 may be integrated with the processor 2220 or configured as a separate processor that operates independently of the processor 2220. When the image signal processor 2360 is configured as a separate processor from the processor 2220, the image processed by the image signal processor 2360 may be displayed through the display device 2260 after passing through additional image processing by the processor 2220.

The electronic apparatus 2201 may include a plurality of camera modules 2280 having different attributes or functions. In this case, one of the camera modules 2280 may be a wide-angle camera, and the one may be a telephoto camera. Similarly, one of the camera modules 2280 may be a front camera, and the one may be a rear camera.

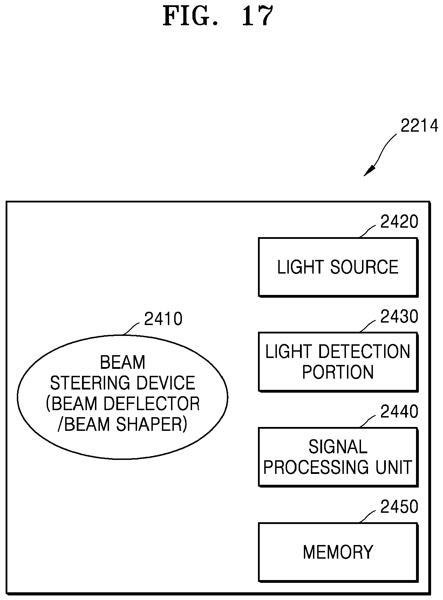

FIG. 17 is a schematic block diagram showing the configuration of the 3D sensor 2214 in the electronic apparatus 2201 of FIG. 15.

Referring to FIG. 17, the 3D sensor 2214 may sense a shape, a movement, and the like of an object by emitting certain light to the object and receiving and analyzing light reflected from the object. The 3D sensor 2214 may include a light source 2420, a beam steering device 2410, a light detection portion 2430, a signal processing unit 2440, and a memory 2450. The beam steering device 100 according to the embodiment described above may be employed as the beam steering device 2410, and a target phase delay profile may be set so that the beam steering device 2410 may function as a beam deflector or a beam shaper.

The light source 2420 emits light used to analyze the shape or position of an object. The light source 2420 may include a light source to generate and emit light of a certain wavelength. The light source 2420 may include a light source, such as a laser diode (LD), a light-emitting diode (LED), a super luminescent diode (SLD), and the like, that emits light in a wavelength band appropriate for analysis of the position and shape of an object, for example, light of a wavelength in an infrared band. The light source 2420 may be a wavelength variable laser diode. The light source 2420 may generate and emit light in a plurality of different wavelength bands. The light source 2420 may generate and emit pulse light or continuous light.

The beam steering device 2410 may modulate the light emitted from the light source 2420 and transmit the modulated light to an object. When the beam steering device 2410 is a beam deflector, the beam steering device 2410 may deflect the incident light in a certain direction to proceed toward an object. When the beam steering device 2410 is a beam shaper, the beam steering device 2410 modulates the incident light to have a distribution having a certain pattern. The beam steering device 2410 may form structured light appropriate for three-dimensional shape analysis.

The light detection portion 2430 may receive reflected light of the light emitted to an object via the beam steering device 2410. The light detection portion 2430 may include an array of a plurality of sensors to sense light or may include only one sensor.

The signal processing unit 2440 may analyze the shape and the like of an object by processing the signal sensed by the light detection portion 2430. The signal processing unit 2440 may analyze a three-dimensional shape including the depth location of an object. For the three-dimensional shape analysis, an operation to measure optical time of flight may be performed. Various operating methods may be used to measure the optical time of flight. For example, a direct time measurement method is to obtain a distance by measuring, by using a timer, a time from projecting pulse light to an object to receiving light reflected from the object. A correlation method is to measure a distance from the brightness of pulse light projected toward an object and reflected from the object. A phase delay measurement method is to detect a phase difference of reflected light by projecting continuous wave light such as a sine wave toward an object and receiving reflected light, and convert the detected phase difference into a distance.

When structured light is emitted to an object, the depth location of an object may be generated from a pattern change of the structure light reflected from the object, that is, a result of comparing with an incident structured light pattern. Object depth information may be extracted by tracking a pattern change for each coordinate of the structured light reflected from the object, and three-dimensional information related to the shape and movement of the object may be extracted therefrom.

Programs and other pieces of data needed for the operation of the signal processing unit 2440 may be stored in the memory 2450. An operation result of the signal processing unit 2440, that is, information about the shape and location of an object, may be transmitted to other units in the electronic apparatus 2201 or other electronic apparatuses. For example, the application 2246 stored in the memory 2230 may use such information. Other electronic apparatuses to which the result is transmitted may be a display device or printer that outputs the result. In addition, other electronic apparatuses to which the result is transmitted may include autonomous driving devices, such as unmanned vehicles, autonomous vehicles, robots, drones, and the like, smartphones, smart watches, mobile phones, personal digital assistants (PDAs), laptop computers, personal computers (PCs), various wearable devices, other mobile or non-mobile computing devices, and IoT devices, but the disclosure is not limited thereto.

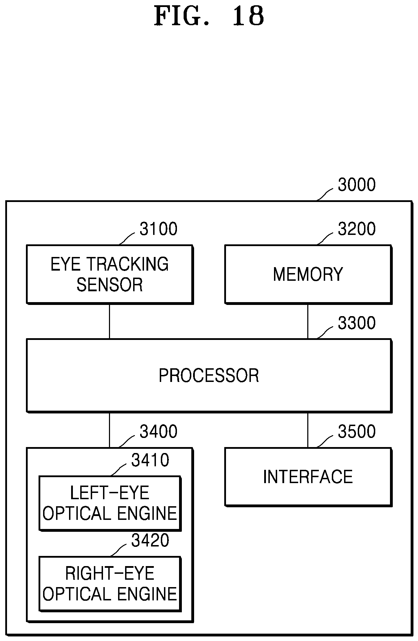

FIG. 18 is a schematic block diagram showing the configuration of an electronic apparatus 3000 according to one or more other example embodiments.

Referring to FIG. 18, the electronic apparatus 3000 may be an augmented reality (AR) device. For example, the electronic apparatus 3000 may be a glasses-type augmented reality device. The electronic apparatus 3000 may include a display engine 3400, a processor 3300, an eye tracking sensor 3100, an interface 3500, and a memory 3200.

The processor 3300 may control the overall operation of the augmented reality device including the display engine 3400 by driving an operating system or an application program, and may perform processing and operation on various pieces of data including image data. For example, the processor 3300 may process image data including a left-eye virtual image and a right-eye virtual image rendered to have binocular disparity.

The interface 3500 is to input/output external data or a manipulation command, and may include, for example, a user interface, such as a touch pad, a controller, a manipulation button, and the like, which is user-operable. The interface 3500 may include a wired communication module such as a USB module, or a wireless communication module such as a Bluetooth, and may receive therethrough user's manipulation information or data of a virtual image from an interface in an external device.

The memory 3200 may include an internal memory such as a volatile memory or a non-volatile memory. The memory 3200 may store, under the control of the processor 3300, various pieces of data, programs, or applications to drive and control the augmented reality device, and input/output signals or data of a virtual image.

The display engine 3400 may be configured to receive the image data generated by the processor 3300 and generate light of a virtual image, and may include a left-eye optical engine 3410 and a right-eye optical engine 3420. Each of the left-eye optical engine 3410 and the right-eye optical engine 3420 may include a light source to emit light and a display panel to form a virtual image using the light output from the light source and may function as a compact projector. The light source may be implemented by, for example, an LED, and the display panel may be implemented by, for example, liquid crystal on silicon (LCoS).

The eye tracking sensor 3100 may be installed at a position where tracking of the pupil of a user wearing the augmented reality device is possible, and may transmit a signal corresponding to information about the user's eye to the processor 3300. The eye tracking sensor 3100 may detect eye information about an eye direction in which the user's eye faces, the pupil location of user's eye, the coordinates of the center point of pupil, and the like information. The processor 3300 may determine the type of eye movements based on the eye information detected by the eye tracking sensor 3100. For example, the processor 3300 may determine various types of eye movements including fixation in which the eye is fixed to look at a single point, pursuit in which the eye follows a moving object, and saccade in where the eye quickly moves from one gaze point to another, and the like, based on the eye information obtained from the eye tracking sensor 3100.

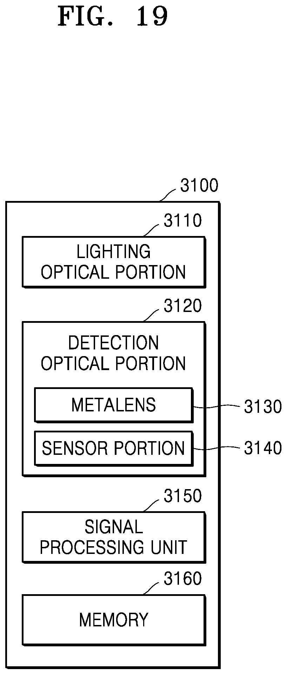

FIG. 19 is a schematic block diagram showing the configuration of the eye tracking sensor 3100 in the electronic apparatus 3000 of FIG. 18.

The eye tracking sensor 3100 may include a lighting optical portion 3110, a detection optical portion 3120, a signal processing unit 3150, and a memory 3160. The lighting optical portion 3110 may include a light source that emits light, for example, an infrared ray, to the location of an object (user's eye). The detection optical portion 3120 may detect reflected light and include a metalens 3130 and a sensor portion 3140. The signal processing unit 3150 may operate the location of the pupil of the user's eye, and the like from a result of sensing by the detection optical portion 3120.

The beam steering device according to the one or more example embodiments described above, or a modified example thereof, may be used as the metalens 3130. The metalens 3130 may focus the light from the object on the sensor portion 3140. In the eye tracking sensor 3100 that is located very close to the user's eye, the incident angle of light incident on the sensor portion 3140 may be, for example, 30° or more. The metalens 3130 has a structure including a compensation area, and efficiency decline may be reduced even for light with a large incident angle. Accordingly, the accuracy of eye tracking may be increased.

The electronic apparatus 3000 may be used not only as the augmented reality device, but also as a virtual reality (VR) device so that tracking of the user's eye for a virtual reality image provided by the virtual reality device may be possible.

The beam steering device according to one or more example embodiments may include a phase change material layer and a grid structure so as to adjust the direction of light. The beam steering device according to one or more example embodiments may be configured by a single element without having to include a plurality of pixel arrays, thereby simplifying an electrode structure.

The electronic apparatus according to one or more example embodiments may include a beam steering device to scan a subject so as to obtain information about the subject.

While one or more example embodiments have been described with reference to the figures, it will be understood by those of ordinary skill in the art that various changes in form and details may be made therein without departing from the scope as defined by the following claims a their equivalents.

**Claims**

1. A beam steering device comprising:

   a phase change material layer;
   a metal layer on the phase change material layer;
   a grid structure between the phase change material layer and the metal layer; and
   a power source connected to the metal layer and configured to supply a current to the metal layer,
   wherein the grid structure is configured to output light traveling in the phase change material layer.

2. The beam steering device of claim 1, further comprising a waveguide area having no grid structure and a light exit area having the grid structure.

3. The beam steering device of claim 2, wherein a width of the waveguide area ranges from 10 $\mu$m to 50 $\mu$m, and a width of the light exit area ranges from 5 $\mu$m to 50 $\mu$m.

4. The beam steering device of any preceding claim, wherein the grid structure is on a surface of the phase change material layer.

5. The beam steering device of any preceding claim, wherein the phase change material layer comprises antimony

triselenide ($Sb_2Se_3$) or antimony trisulfide ($Sb_2S_3$).

6. The beam steering device of any preceding claim, wherein the metal layer comprises gold (Au), silver (Ag), aluminum (Al), tungsten (W), or copper (Cu).

7. The beam steering device of any preceding claim, further comprising a dielectric layer between the phase change material layer and the metal layer,
   wherein the grid structure is between the dielectric layer and the metal layer.

8. The beam steering device of claim 7, wherein the dielectric layer comprises silicon oxide ($SiO2$), aluminum oxide ($Al2O3$), zinc oxide (ZnO), titanium oxide ($TiO2$), or silicon nitride ($Si3N4$).

9. The beam steering device of claim 7 or 8, wherein a refractive index of the dielectric layer is less than a refractive index of the phase change material layer in an amorphous state.

10. The beam steering device of claim 7, 8 or 9, wherein a difference between a refractive index of the phase change material layer and a refractive index of the dielectric layer is greater than or equal to 0.5 and less than or equal to 5.

11. The beam steering device of any preceding claim, wherein a thickness of the phase change material layer ranges from 40 nm to 100 nm.

12. The beam steering device of any preceding claim, wherein a thickness of the metal layer ranges from 10 nm to 1000 nm.

13. The beam steering device of any preceding claim, further comprising a metal substrate on the phase change material layer opposite to the metal layer.

14. An electronic apparatus comprising:

   a light source configured to emit light;
   a beam steering device according to nay preceding claim configured to adjust a direction of the light emitted from the light source to an object;
   a photodetector configured to detect light reflected from the object; and
   at least one processor configured to control the beam steering device.

# FIG. 1

# FIG. 2

## FIG. 3

## FIG. 4

# FIG. 5

# FIG. 6

# FIG. 7A

# FIG. 7B

# FIG. 7C

# FIG. 8A

# FIG. 8B

# FIG. 8C

# FIG. 9

# FIG. 10

FIG. 11

# FIG. 12

FIG. 13

# FIG. 14

# FIG. 15

2200

ELECTRONIC APPARATUS — 2201

INPUT DEVICE — 2250

AUDIO OUTPUT DEVICE — 2255

DISPLAY DEVICE — 2260

BATTERY — 2289

POWER MANAGEMENT MODULE — 2288

AUDIO MODULE — 2270

HAPTIC MODULE — 2279

CAMERA MODULE — 2280

PROCESSOR — 2220
MAIN PROCESSOR — 2221
AUXILIARY PROCESSOR — 2223

SENSOR MODULE — 2210
FINGERPRINT SENSOR — 2211
ACCELERATION SENSOR — 2212
POSITION SENSOR — 2213
3D SENSOR — 2214

MEMORY — 2230
VOLATILE MEMORY — 2232
NON-VOLATILE MEMORY — 2234
INTERNAL MEMORY — 2236
EXTERNAL MEMORY — 2238

COMMUNICATION MODULE — 2290
WIRELESS COMMUNICATION MODUEL — 2292
WIRED COMMUNICATION MODUEL — 2294

SUBSCRIBER IDENTIFICATION MODULE — 2296

ANTENNA MODULE — 2297

INTERFACE — 2277

CONNECTION TERMINAL — 2278

PROGRAM — 2240
APPLICATION — 2246
MIDDLEWARE — 2244
OPERATING SYSTEM — 2242

NETWORK — 2299

ELECTRONIC APPARATUS — 2204

2298

ELECTRONIC APPARATUS — 2202

SERVER — 2208

# FIG. 16

2280

FLASH 2320

IMAGE SENSOR 2330

2310 LENS ASSEMBLY

DEPTH SENSOR 2335

IMAGE SIGNAL PROCESSOR 2360

IMAGE STABILIZER 2340

MEMORY 2350

# FIG. 17

2214

2420

LIGHT SOURCE

2410

BEAM
STEERING DEVICE
(BEAM DEFLECTOR
/BEAM SHAPER)

2430

LIGHT DETECTION
PORTION

2440

SIGNAL
PROCESSING UNIT

2450

MEMORY

# FIG. 18

```
                                                    ⌐3000
 ┌──────────────────────────────────────────────────────┐
 │        ⌐3100                       ⌐3200              │
 │  ┌──────────────────┐     ┌──────────────────┐        │
 │  │  EYE TRACKING    │     │     MEMORY       │        │
 │  │    SENSOR        │     │                  │        │
 │  └──────────────────┘     └──────────────────┘        │
 │           │                        │  ⌐3300           │
 │  ┌─────────────────────────────────────────────┐      │
 │  │              PROCESSOR                        │      │
 │  └─────────────────────────────────────────────┘      │
 │           │  ⌐3400                 │  ⌐3500           │
 │  ┌──────────────────┐     ┌──────────────────┐        │
 │  │       ⌐3410      │     │   INTERFACE      │        │
 │  │  ┌────────────┐  │     │                  │        │
 │  │  │ LEFT-EYE   │  │     └──────────────────┘        │
 │  │  │OPTICAL ENGINE│ │                               │
 │  │  └────────────┘  │                                │
 │  │       ⌐3420      │                                │
 │  │  ┌────────────┐  │                                │
 │  │  │ RIGHT-EYE  │  │                                │
 │  │  │OPTICAL ENGINE│ │                               │
 │  │  └────────────┘  │                                │
 │  └──────────────────┘                                │
 └──────────────────────────────────────────────────────┘
```

# FIG. 19

```
                                         ⌐3100
    ┌─────────────────────────────────────┐
    │                             ⌐3110    │
    │    ┌───────────────────────┐         │
    │    │      LIGHTING         │         │
    │    │   OPTICAL PORTION     │         │
    │    └───────────────────────┘         │
    │                             ⌐3120    │
    │    ┌───────────────────────┐         │
    │    │      DETECTION        │         │
    │    │   OPTICAL PORTION     │         │
    │    │  ┌─────────────────┐  │         │
    │    │  │    METALENS     │──┼──3130    │
    │    │  └─────────────────┘  │         │
    │    │  ┌─────────────────┐  │         │
    │    │  │  SENSOR PORTION │──┼──3140    │
    │    │  └─────────────────┘  │         │
    │    └───────────────────────┘         │
    │                             ⌐3150    │
    │    ┌───────────────────────┐         │
    │    │       SIGNAL          │         │
    │    │   PROCESSING UNIT     │         │
    │    └───────────────────────┘         │
    │                             ⌐3160    │
    │    ┌───────────────────────┐         │
    │    │       MEMORY          │         │
    │    └───────────────────────┘         │
    └─────────────────────────────────────┘
```

Europäisches
Patentamt
European
Patent Office
Office européen
des brevets

# EUROPEAN SEARCH REPORT

**Application Number**

EP 24 21 3561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/050354 A1 (PARK JUNGHYUN [KR] ET AL) 17 February 2022 (2022-02-17) * paragraph [0011]; claim 1; figures 1A, 1B, 3, 8 * * paragraphs [0058] - [0063] * * paragraphs [0015], [0072], [0074], [0079] * | 1-14 | INV. G02F1/01 G02F1/29 |
| A | WANG TAO ET AL: "Phase-change material assisted on-chip wavefront shaping for optical switching and beam splitting", OPTICS COMMUNICATIONS, ELSEVIER, AMSTERDAM, NL, vol. 527, 10 September 2022 (2022-09-10), XP087199794, ISSN: 0030-4018, DOI: 10.1016/J.OPTCOM.2022.128974 [retrieved on 2022-09-10] * the whole document * | 1-14 | |
| A | US 2023/103982 A1 (SONG JUNG-HWAN [US] ET AL) 6 April 2023 (2023-04-06) * paragraphs [0005], [0071] - [0089]; figures 1,3 * | 1-14 | **TECHNICAL FIELDS SEARCHED (IPC)** G02F |

The present search report has been drawn up for all claims

| Place of search | Date of completion of the search | Examiner |
|---|---|---|
| The Hague | 4 April 2025 | Gill, Richard |

EPO FORM 1503 03.82 (P04C01)

## ANNEX TO THE EUROPEAN SEARCH REPORT
## ON EUROPEAN PATENT APPLICATION NO.

EP 24 21 3561

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | Publication date | Patent family member(s) | Publication date |
|---|---|---|---|
| US 2022050354 A1 | 17-02-2022 | NONE | |
| US 2023103982 A1 | 06-04-2023 | NONE | |

EPO FORM P0459

For more details about this annex : see Official Journal of the European Patent Office, No. 12/82